# EUROPÄISCHE PATENTSCHRIFT

(11) **EP 2 417 412 B1**
(45) Veröffentlichungstag und Bekanntmachung des Hinweises auf die Patenterteilung: **14.08.2013**
(21) Anmeldenummer: 10713139.3
(22) Anmeldetag: 07.04.2010
(51) Int. Cl.: F27B 3/18, F27D 3/04, F27D 19/00, C21C 5/52, C21C 5/46

(54) **CHARGIERVORRICHTUNG**
CHARGING DEVICE
DISPOSITIF DE CHARGEMENT

(30) Priorität: 07.04.2009 DE 102009016774
(43) Veröffentlichungstag der Anmeldung: 15.02.2012
(73) Patentinhaber: Fuchs Technology Holding AG, 6010 Kriens (CH)
(72) Erfinder: FUCHS, Gerhard, 77694 Kehl-Bodersweider (DE)
(74) Vertreter: Kramer - Barske - Schmidtchen
(86) Internationale Anmeldenummer: PCT/EP2010/002185
(87) Internationale Veröffentlichungsnummer: WO 2010/115619

(56) Entgegenhaltungen:
- WO-A1-2005/052481

## Beschreibung

Die Erfindung betrifft eine Chargiervorrichtung zum Chargieren von Chargiergut in ein Schmelzgefäß, enthaltend einen Schacht mit in einer Rahmenkonstruktion gehaltenen Schachtwänden, einem unteren Schachtboden, einer oberen Eintrittsöffnung für Chargiergut, einer Austrittsöffnung für Chargiergut im unteren Bereich einer Schachtwand, einen Schieber, der zum Fördern von Chargiergutteilmengen aus dem Schacht durch die genannte Austrittsöffnung hindurch mittels einer ersten Betätigungsvorrichtung zyklisch aus einer, den Schachtboden freigebenden, zurückgezogenen, ersten Position zur genannten Austrittsöffnung hin in eine vorgeschobene, zweite Position vorschiebbar und dann wieder in die erste Position zurückschiebbar ist, ferner enthaltend ein die genannte Austrittsöffnung oben begrenzendes heb- und senkbares oberes Begrenzungsteil. Insbesondere bezieht sich die Erfindung auf eine Chargiervorrichtung dieser Art, die als Chargiergutvorwärmer zum Vorerhitzen eines in ein Schmelzgefäß zu chargierenden Einsatzmaterials ausgebildet ist.

Die durch die WO 2005/052481 bekannt gewordene Chargiervorrichtung dieser Art und der hierdurch bekannt gewordene Chargiergutvorwärmer ermöglichen ein Chargieren von Chargiergut stark schwankender Größe ohne vorherige Sortierung. Dies deshalb, weil Maßnahmen vorgesehen sind, um Blockierungen durch sperriges Gut beim schubweisen Fördern von Chargiergut durch die Austrittsöffnung der Chargiervorrichtung zu verhindern.

Durch die US 6,004,504 sind ein Verfahren und eine Vorrichtung zum Steuern einer kontinuierlichen Stahlherstellung im Lichtbogenofen bekannt geworden. Das metallische Chargiergut wird dem Lichtbogenofen durch ein Förderband zugeführt. Ein Chargiergutgeschwindigkeitsdetektor misst die Geschwindigkeit des dem Ofen zugeführten metallischen Chargierguts und ein Chargiergutmassendetektor die Masse des dem Ofen zugeführten metallischen Chargierguts. Ein Rechner bestimmt dann die Fördergeschwindigkeit des Förderbandes, das das Chargiergut in das Ofengefäß transportiert, auf der Grundlage der Geschwindigkeit und der Masse des dem Ofen zugeführten metallischen Chargierguts. Diese Maßnahmen sind vorgesehen, um optimale Schmelzbedingungen sowie eine effiziente Energieausnutzung beim Stahlherstellungsprozess zu erzielen. Die Chargiergutgeschwindigkeit wird mittels Doppler-Geschwindigkeitsmessung bestimmt und die Chargiergutmasse und damit das Gewicht des durch das vibrierende Förderband geförderten Chargierguts durch Bestrahlen und Messen der Absorption durch das Chargiergut. Die Chargiervorrichtung kann auch als Chargiergutvorwärmer ausgebildet sein.

Durch die WO 2006/108691 ist eine Anlage zur Messung und zur Steuerung des Chargierens eines Ofens mit Beschickungsmaterial und Schrottmetall bekannt geworden, die eine automatische Steuervorrichtung zur Steuerung der Beschickung mit Chargiermaterial bzw. Schrott in Abhängigkeit von der dem Bad zugeführten Energie und in Korrelation mit der automatischen Steuervorrichtung eine Messvorrichtung für das zugeführte Chargiermaterial aufweist, welche eine Wiegevorrichtung für das Ofengefäß einschließlich seines Inhalts und anderer Komponenten enthält. Bei einem kippbaren Lichtbogenofen, bei dem sich das Ofengefäß auf einer kippbaren Plattform abstützt, sind zwischen dieser und dem Ofengefäß Sensoren angeordnet, die Messsignale liefern, welche für das Gewicht des Ofengefäßes kennzeichnend sind. Durch die Erfassung der Gewichtszunahme des Ofengefäßes als Folge von dem Ofengefäß kontinuierlich durch einen Förderer zugeführtem Einsatzmaterial ist es möglich, die Zufuhr des Einsatzmaterials in den Ofen, abhängig von der dem Ofen zugeführten Schmelzenergie, in gewünschter Weise zu steuern. Zu diesem Zweck werden ein Signal, das die dem Ofen zugeführte Energie kennzeichnet und ein das Gewicht des Ofengefäßes kennzeichnendes Signal einem Regler zugeführt, der die Geschwindigkeit des Förderers steuert, beispielsweise so, dass die Temperatur des flüssigen Metalls im Ofen nahe dem für den Einschmelzprozess idealen Wert gehalten wird.

Durch die EP 0 646 758 ist eine Vorrichtung zum Vorheizen und Fördern von Chargiermaterial in ein Ofengefäß bekannt geworden, bei der oberhalb des Ofengefäßes ein schachtförmiger Chargiergutvorwärmer angeordnet ist, aus dem vorerhitztes Chargiermaterial mittels eines Schiebers über einen schrägen Durchlassabschnitt durch eine Öffnung im Ofengefäßdeckel im Wesentlichen kontinuierlich in das Ofengefäß eingebracht werden kann. Die bei jeder hin- und hergehenden Bewegung des Schiebers in das Ofengefäß eingebrachte Menge an Chargiermaterial ist durch Steuern der Geschwindigkeit oder des Hubs des Schiebers einstellbar. Bei einer Ausführungsform ist hinter dem Durchlassabschnitt eine von einer Wiegeeinrichtung getragene Wiegeplatte vorgesehen. Dieser werden über den Durchlassabschnitt Teilmengen des Chargiermaterials zugeführt. Durch die Wiegeeinrichtung wird das Gewicht der zugeführten Teilmengen bestimmt und dann werden die Teilmengen über einen weiteren Schieber durch den Ofendeckel in das Ofengefäß chargiert. Eine waagrechte obere, in der Höhe einstellbare Führungsstange verhindert, dass Material unkontrolliert über die Wiegeplatte in das Ofengefäß fällt und damit gewichtsmäßig nicht erfasst wird.

Die bekannten Anlagen, bei denen das Einsatzmaterial des Lichtbogenofens kontinuierlich oder im Wesentlichen kontinuierlich chargiert wird, wobei zur Optimierung des Schmelzprozesses die Fördergeschwindigkeit der Chargiervorrichtung steuerbar ist, können nur mit einem verhältnismäßig homogenen, kleinstückigen Einsatzmaterial, wie Eisenschwammpellets, Eisenbriketts oder mit sortiertem Stahlschrott betrieben werden.

Aufgabe der vorliegenden Erfindung ist es, eine Chargiervorrichtung bzw. einen Chargiergutvorwärmer der einleitend genannten Art so auszubilden, dass unsortiertes, sperrige Teile enthaltendes Chargiergut, einem Ofengefäß gesteuert zuführbar ist, so dass der Einschmelzprozess durch gesteuerte Zufuhr des Einsatzmaterials in gewünschter Weise beeinflusst werden kann.

Die Erfindung ist durch die Merkmale des Anspruchs 1 gekennzeichnet. Vorteilhafte Ausgestaltungen der Erfindung sind in den Unteransprüchen angegeben.

Demgemäß ist neben einer ersten Betätigungsvorrichtung für einen Schieber, der schubweise Chargiergut aus der Chargiervorrichtung durch deren Austrittsöffnung fördert, eine zweite Betätigungsvorrichtung zum Anheben eines die Austrittsöffnung oben begrenzenden heb- und senkbaren oberen Begrenzungsteils vorgesehen. Beim Ausfördern von sperrigem Gut wird das obere Begrenzungsteil nicht durch sich hindurchzwängendes blockierendes Gut angehoben, sondern es wird beim Vorschieben des Schiebers die Schubkraft erfasst, die bei einer sich anbahnenden Blockierung durch sperriges Gut ansteigt und es wird bei Überschreiten eines vorbestimmten Grenzwertes die Austrittsöffnung durch Anheben des oberen Begrenzungsteils mittels der zweiten Betätigungsvorrichtung aktiv vergrößert.

Vorzugsweise wird bei einer Ausbildung der ersten Betätigungsvorrichtung als hydraulischer Linearantrieb die Vorschubkraft durch Messen des Hydraulikdrucks des Linearantriebs erfasst.

Die Erfindung wird durch ein Ausführungsbeispiel anhand von fünf Figuren näher erläutert. Es zeigen in schematischer Darstellung
Fig. 1 eine perspektivische Ansicht einer erfindungsgemäßen, als Chargiergutvorwärmer ausgebildeten Chargiervorrichtung
Fig. 2 eine Seitenansicht, teilweise im Schnitt, der an das Gefäß eines Lichtbogenofens angeschlossenen Chargiervorrichtung von Fig. 1,
Fig. 3 eine perspektivische Ansicht des unteren Teils der Chargiervorrichtung von Fig. 1,
Fig. 4 die Positionierung von Brennern am Rand des Schmelzgefäßes unterhalb der Austrittsöffnung der Chargiervorrichtung, und
Fig. 5 in einer perspektivischen Ansicht eine bevorzugte Ausführungsform des Schiebers der Chargiervorrichtung.

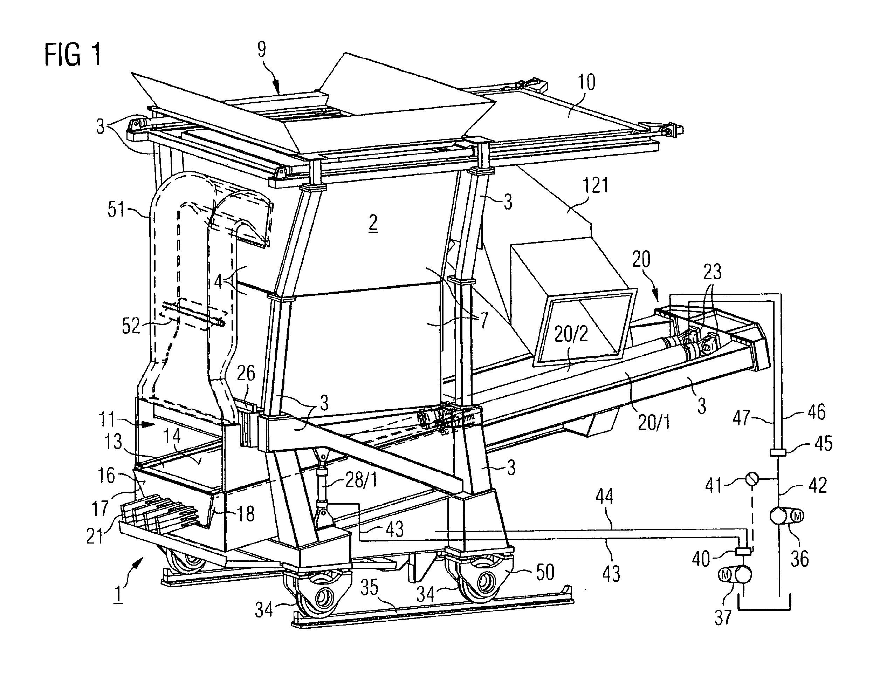

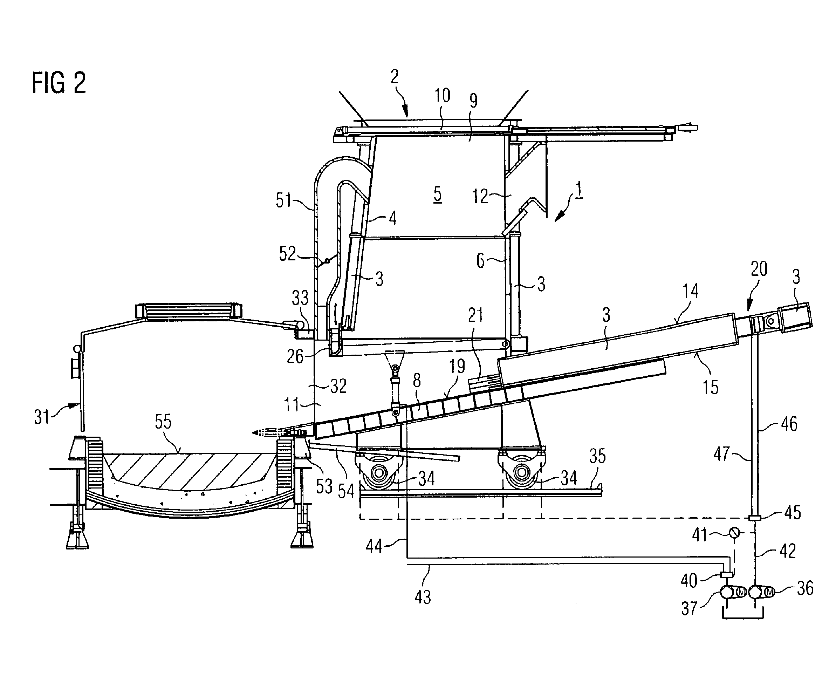

Der in Fig. 1 perspektivisch und in Fig. 2 in einer Seitenansicht, teilweise im Schnitt dargestellte, schachtförmige Chargiergutvorwärmer 1 zum Vorwärmen von in ein Schmelzgefäß 31 zu chargierendem Chargiergut enthält einen Schacht 2 mit in einer Rahmenkonstruktion 3 gehaltenen Schachtwänden 4, 5, 6 und 7, ferner einen unteren Schachtboden 8 und eine obere Eintrittsöffnung 9 für Chargiergut, die durch einen verschiebbaren Deckel 10 verschließbar ist. Im unteren Bereich des Schachtes 2 ist in der, bei der Darstellung nach Fig. 2 linken Seitenwand 4 eine Austrittsöffnung 11 für Chargiergut vorgesehen, die gleichzeitig einen Gaseinlass für ein Heizgas zum Aufheizen von im Schacht befindlichem Chargiergut bildet. Im oberen Bereich des Schachtes 2 ist ein Gasauslass 12 vorhanden. Fig. 1 zeigt einen an diesen Gasauslass angeschlossenen Abgaskrümmer 121.

Der Chargiergutvorwärmer enthält ferner einen Schieber 13. Der Schieber 13 weist eine Oberseite 14, eine Unterseite 15, eine quer zur Verschieberichtung verlaufende Stirnseite 16 und zwei parallel zur Verschieberichtung verlaufende Seitenflächen 17 und 18 auf. Der Schieber 13 ist mit seiner Unterseite 15 auf der Oberseite 19 des Schachtbodens 8 aufliegend, zwischen einer den Schachtboden innerhalb der Schachtwände freigebenden, zurückgezogenen, ersten Position (Fig. 2) und einer in Richtung der Austrittsöffnung 11 vorgeschobenen, zweiten Position (Fig. 1) verschiebbar. Damit der Schieber 13 auch in der zurückgezogenen ersten Position geführt wird, ist der Schachtboden 8 über die bezüglich der Austrittsöffnung 11 hintere Schachtwand 6 hinaus verlängert. Das Vor- und Zurückschieben des Schiebers 13 erfolgt durch eine erste Betätigungsvorrichtung 20, die im dargestellten Fall in Form von zwei hydraulischen Linearantrieben 20/1 und 20/2, jeweils aus einem Hubzylinder und einer Hubstange, ausgebildet ist. Die erste Betätigungsvorrichtung 20 ist in der Rahmenkonstruktion 3 um eine horizontale Achse schwenkbar gelagert. Zu diesem Zweck ist jeder der hydraulischen Linearantriebe über horizontale Zapfen einerseits durch Schwenklager 23 mit dem Rahmen 3 und andererseits durch nicht dargestellte Schwenklager mit dem Schieber 13 um horizontale Achsen schwenkbar verbunden. Hierdurch können Verklemmungen oder Blockierungen des Schiebers, die bei dessen Vor- und Rückwärtsbewegung durch das Einsatzmaterial verursacht werden, vermieden werden.

Die Oberseite 19 des Schachtbodens 8 ist vorzugsweise zur Austrittsöffnung 11 des Schachtes 2 hin abfallend ausgebildet. Ein Neigungswinkel von 15 Grad gegenüber der Waagerechten hat sich als vorteilhaft erwiesen. Der Neigungswinkel sollte nicht größer als 45 Grad sein, weil sonst Chargiergut unkontrolliert die Austrittsöffnung 11 verlassen und dann der Chargiergutaustrag nicht mehr ausreichend genau gesteuert werden könnte.

Der Konvergenzwinkel der nach unten konvergierenden Seitenflächen 17, 18 des Schiebers 13 gegenüber der Waagerechten liegt vorzugsweise zwischen 45 Grad und 75 Grad. Als besonders vorteilhaft haben sich etwa 60 Grad erwiesen.

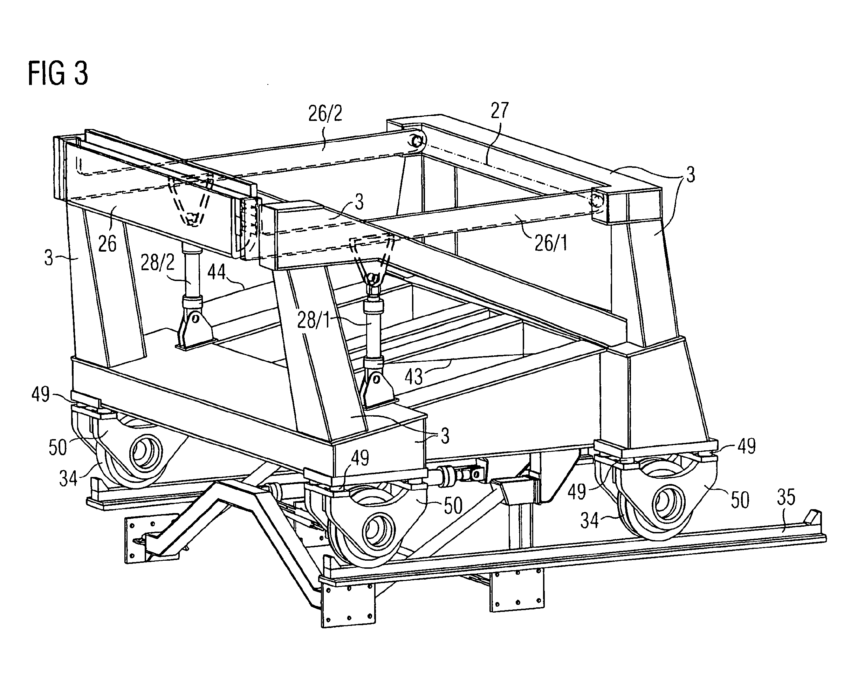

Um beim Austragen von unsortiertem Schrott Blockierung durch sperriges Material an der Austrittsöffnung 11 zu vermeiden, ist als obere Begrenzung der Austrittsöffnung 11 ein heb- und senkbares oberes Begrenzungsteil vorgesehen, das bei dem beschriebenen Ausführungsbeispiel als Begrenzungsbalken 26 ausgebildet ist. Der Begrenzungsbalken 26 kann, um beim Anheben und beim Absenken geführt zu werden, mit seinen Enden in vertikalen Führungen des Rahmens 3 eingreifen. Bei dem beschriebenen Ausführungsbeispiel sind als eine Alternative an den Enden des Begrenzungsbalkens 26 Schwenkhebel 26/1 und 26/2 angebracht, die um eine feststehende horizontale Achse 27 (siehe Fig. 3) der Rahmenkonstruktion 3 schwenkbar gelagert und mittels einer zweiten Betätigungsvorrichtung 28 anhebbar und absenkbar sind. Die zweite Betätigungsvorrichtung 28 ist im vorliegenden Fall, ebenso wie die erste Betätigungsvorrichtung 20, in Form zweier, jeweils am Rahmen 3 und am entsprechenden Schwenkhebel 26/1 bzw. 26/2 angelenkter hydraulischer Linearantriebe 28/1 bzw. 28/2 ausgebildet, durch die der Begrenzungsbalken 26 heb- und senkbar ist.

Zur Steuerung der zweiten Betätigungsvorrichtung 28, im konkreten Fall der hydraulischen Linearantriebe 28/1 und 28/2, ist eine erste Steuereinheit 40 vorgesehen, die die Vorschubkraft beim Vorschieben des Schiebers 13 erfasst, diese mit einem oberen Grenzwert vergleicht und beim Überschreiten des Grenzwertes ein Stellsignal an die zweite Betätigungsvorrichtung 28 liefert, welches diese veranlasst, das obere Begrenzungsteil 26 der Austrittsöffnung 11 anzuheben und beim Zurückschieben des Schiebers 13 ein Absenken des oberen Begrenzungsteils 26 zur unteren Position freizugeben oder durch die zweite Betätigungsvorrichtung 28 vorzunehmen. Bei dem Ausführungsbeispiel wird die Vorschubkraft beim Vorschieben des Schiebers 13 über den durch eine Hydraulikpumpe 36 erzeugten Druck der Hydraulikflüssigkeit erfasst, durch den die Vorschubkraft in den beiden, synchron gesteuerten hydraulischen Linearantrieben 20/1 und 20/2 bewirkt wird. Zu diesem Zweck ist die erste Steuereinheit 40, die das Anheben und Absenken des oberen Begrenzungsbalkens 26 über den durch eine Hydraulikpumpe 37 erzeugten Druck veranlasst, elektrisch mit einem Messwandler 41 verbunden, der den Druck in der Hydraulikleitung 42 misst, mit dem die beiden hydraulischen Linearantriebe 20/1 und 20/2 beaufschlagt werden und an die erste Steuereinheit 40 ein diesen Druck kennzeichnendes Signal liefert. Die Steuereinheit 40 vergleicht das Signal mit einem oberen Grenzwert und beaufschlagt die zweite Betätigungsvorrichtung 28 zum Anheben des oberen Begrenzungsbalkens 26, im konkreten Fall die beiden synchron gesteuerten hydraulischen Linearantriebe 28/1 und 28/2 über Hydraulikleitungen 43 bzw. 44 mit einem Druck, der ein Anheben des oberen Begrenzungsbalkens 26 zur Folge hat. Eine sich beim Austrag von sperrigem Gut anbahnende Blockierung, welche zu einem Druckanstieg in der Hydraulikleitung 42 führt, wird auf diese Weise durch aktives Anheben des oberen Begrenzungsbalkens 26, veranlasst durch die erste Steuereinheit 40, beseitigt.

Wenn nach dem durch die erste Steuereinheit 40 veranlassten und durch die zweite Betätigungsvorrichtung 28 vorgenommenen Anheben des oberen Begrenzungsbalkens 26 der durch den Messwandler 41 erfasste Druck in der Hydraulikleitung 42 wieder abnimmt, weil das blockierende Teil die vergrößerte Austrittsöffnung 11 des Schachtes 2 passiert hat oder weil der Schieber 13 wieder zurückgeschoben wird, wird das Absenken des oberen Begrenzungsteils 26 zur Ausgangsposition hin frei gegeben. Das Absenken des oberen Begrenzungsteils 26 kann durch Schwerkraft oder Federkraft erfolgen. Es wird bei dem Ausführungsbeispiel aktiv durch eine entsprechende Steuerung der zweiten Betätigungsvorrichtung 28 mittels der Hydraulikflüssigkeit über die Leitungen 43 bzw. 44 vorgenommen.

An der Stirnseite 16 des Schiebers 13 sind in Richtung der Vorschubbewegung des Schiebers 13 verlaufende Stoßstangen 21 im Abstand voneinander angeordnet. Bei dem Ausführungsbeispiel sind die Stoßstangen 21 nur im unteren Bereich der Stirnseite 16 des Schiebers 13 vorgesehen. Durch diese Maßnahmen wird der Verlauf der durch den Messwandler 41 erfassten Vorschubkraft beim Vorschieben des Schiebers 13 günstig beeinflusst.

Vorzugsweise ist die als Chargiergutvorwärmer ausgebildete Chargiervorrichtung zum Vorwärmen von in ein Schmelzgefäß, insbesondere in das Gefäß eines Lichtbogenofens zu chargierendem Chargiergut bestimmt. Zu diesem Zweck ist es vorteilhaft, wenn die Verbindung zwischen Chargiergutvorwärmer und dem Schmelzgefäß schnell gelöst werden kann, damit beim Kippen des Gefäßes der Chargiergutvorwärmer nicht mitgekippt werden muss. Andererseits soll das heiße Abgas des Lichtbogenofens ohne wesentliche Verluste durch die Austrittsöffnung 11 für das Chargiergut, die als Gaseinlass dient, in den Schacht 2 eingeleitet und nach Durchströmen des zu erhitzenden Chargiergutes durch den oberen Gasauslass 12 wieder abgeleitet werden können.

In Fig. 2 ist eine bevorzugte Verbindung zwischen dem Chargiergutvorwärmer 1 und einem kippbaren Gefäß 31 eines Lichtbogenofens dargestellt. Der obere, üblicherweise aus wassergekühlten Wandelementen bestehende Teil des Gefäßes 31 ist mit einer rechteckigen Eintrittsöffnung 32 für Chargiergut versehen. Vorzugsweise ist das Gefäß 31 in der Draufsicht oval ausgebildet, so dass es einfacher möglich ist, hier eine rechteckförmige Eintrittsöffnung 32 vorzusehen. An der Austrittsöffnung 11 des Chargiergutvorwärmers 1 ist ein, diese umgebender Ansatz 33 zum Anschließen an die als Chargieröffnung dienende Eintrittsöffnung 32 des Schmelzgefäßes vorgesehen. Der Ansatz ist in Form einer Muffe ausgebildet, deren Außenkontur zum Einsetzen in die Chargieröffnung 32 an deren Innenkontur angepasst ist. Außerdem ist der Chargiergutvorwärmer 1 verschiebbar ausgebildet. Zu diesem Zweck ist bei dem Ausführungsbeispiel der Rahmen 3 mittels Rollen 34 auf Schienen 35 horizontal, in einer Richtung quer zur Kipprichtung des Schmelzgefäßes 31 verfahrbar ausgebildet. Vor dem Kippen des Schmelzgefäßes 31 zum Abstechen einer Schmelze wird die Verbindung zwischen der Muffe 33 und der Chargieröffnung 32 durch Verfahren des Chargiergutvorwärmers 1, bei der Darstellung von Fig. 2 nach rechts, gelöst.

Durch Vorschieben des Schiebers 13 werden jeweils Chargiergutteilmengen, die bei unsortiertem Schrott stark schwanken können, durch die Austrittsöffnung 11 des Schachtes 2 und durch die Eintrittsöffnung 32 des Ofengefäßes 31 in dieses gefördert. Die pro Zeiteinheit geförderte Menge an Einsatzmaterial lässt sich sowohl durch die Häufigkeit bzw. die Taktfolge der Vorschubbewegungen wie auch durch den Geschwindigkeitsverlauf der einzelnen Vorschubbewegungen, das heißt durch den Geschwindigkeitsverlauf der Vorwärts- und/oder der Rückwärtsbewegungen des Schiebers 13 steuern. Zu diesem Zweck ist eine zweite Steuereinheit 45 vorgesehen, die den Fluss der Hydraulikflüssigkeit in den Hydraulikleitungen 46 und 47 zu den hydraulischen Linearantrieben 20/1 bzw. 20/2 synchron entsprechend steuert. Bei dem dargestellten Ausführungsbeispiel wird die Häufigkeit der Vorschubbewegungen, d.h. die Taktfolge des Fördervorgangs durch die zweite Steuereinheit 45 in Abhängigkeit von dem Gewicht der dem Ofengefäß schubweise zugeführten Chargiergutteilmengen gesteuert. Das Gewicht der bei einer Vorschubbewegung des Schiebers 13 in das Ofengefäß geförderten Chargiergutteilmenge wird hierbei jeweils durch den Gewichtsverlust der im Schacht befindlichen Gesamtmenge an Chargiergut mittels einer hierfür ausgelegten Wiegevorrichtung erfasst. Zu diesem Zweck sind bei dem beschriebenen Ausführungsbeispiel zwischen dem, den Schacht 2 tragenden Rahmen 3 und dessen Auflage auf Fahrgestellen 50 der Räder 34 Wägezellen 49 angeordnet (siehe Fig.3). Diese liefern an die zweite Steuereinheit 45 ein durch diese verarbeitbares Messsignal, das für eine Gewichtsveränderung des Schachtes 2 kennzeichnend ist. Bei dem Ausführungsbeispiel sind an jedem der vier Fahrgestelle Wägezellen 49 vorgesehen.

Durch diese Maßnahme ist es möglich, das Gewicht der bei einem Vorschub des Schiebers 13 in das Ofengefäß chargierten Teilmenge zu bestimmen und falls diese nicht dem Sollwert entspricht, durch Verändern der Taktfrequenz oder der Geschwindigkeit des Schiebers bei den nächsten Vorschubbewegungen des Schiebers auszugleichen. Auf diese Weise lassen sich auch starke Gewichtsschwankungen des pro Vorschub des Schiebers eingebrachten Einsatzmaterials, wie sie bei unsortiertem Schrott vorkommen können, durch die zweite Steuereinheit 45 innerhalb des nächsten oder der nächsten Vorschubzyklen auf den vorgegebenen Sollwert regeln.

Im Hinblick auf eine Optimierung des Einschmelzprozesses bestimmt sich die dem Ofengefäß pro Zeiteinheit zuzuführende Gewichtsmenge und somit der Sollwert für die zweite Steuereinheit 45 durch die Einschmelzleistung des Schmelzofens und die Temperatur des im Chargiergutvorwärmer vorgewärmten Materials. Diese Größen werden bei der Vorgabe des Sollwerts für die zweite Steuereinheit als Führungsgröße berücksichtigt.

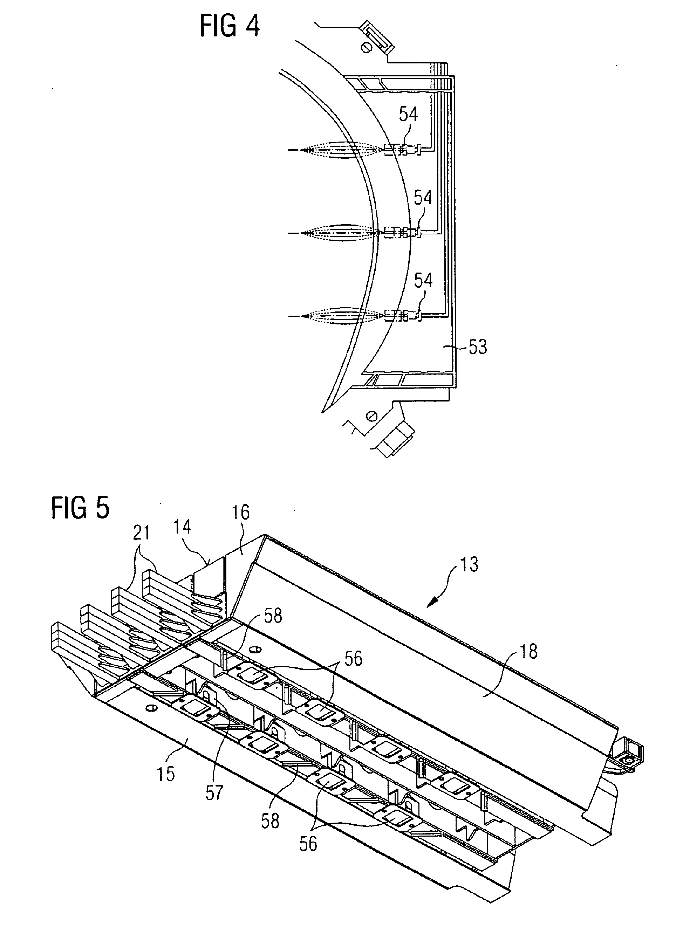

Bei dem dargestellten Ausführungsbeispiel wird die Schmelzleistung einerseits durch den Lichtbogen bzw. die Lichtbögen des Lichtbogenofens und andererseits durch Brenner 54 eingebracht (siehe Fig. 2 und 4). Unterhalb der Chargieröffnung 32 des Ofengefäßes ist ein Kasten 53 mit drei Brennern 54 angeordnet ist, deren Austrittsöffnungen oberhalb des maximalen Schmelzbadspiegels 55 in das Ofengefäß 31 münden. Auf diese Weise wirken die Brenner auf der zur Lichtbogenstrahlung entgegen gesetzten Seite direkt auf das in das Ofengefäß geförderte Einsatzmaterial ein. Hierdurch lässt sich die Schmelzleistung des Lichtbogenofens effektiv vergrößern und die Schmelzzeit verkürzen.

Bei einer Vergrößerung der Schmelzleistung, insbesondere durch Brenner, steht für den Chargiergutvorwärmer, in den die Abgase des Ofengefäßes durch dessen Austragsöffnung 11 eingeleitet werden, mehr Energie zum Aufheizen zur Verfugung. Je nach Zusammensetzung des Einsatzmaterials, beispielsweise wenn dieses Leichtschrott, wie Späne, enthält, kann es im Schacht 2 bereits zum Aufschmelzen und Zusammenbacken von Einsatzmaterial kommen. Hierdurch könnte der gesteuerte Austrag des Chargierguts aus dem Chargiergutvorwärmer gestört werden. Um dies zu verhindern, ist bei der dargestellten Ausführungsform eine Gas-Bypassleitung 51 mit einer Klappe 52 vorgesehen, durch die bei Gefahr einer zu starken Erhitzung des Einsatzmaterials im Schacht 2 wenigstens ein Teil des im Schmelzgefäß erzeugten heißen Abgases am Schacht 2 des Chargiergutvorwärmers 1 vorbei in dessen oberen Bereich zum Gasauslass 12 geleitet werden kann. Die Steuerung der Klappe 52 kann mittels geeignet, beispielsweise im Bereich des Abgaskrümmers 121 angebrachter Temperatursensoren automatisiert werden. Ein Aufschmelzen und Zusammenbacken von Einsatzmaterial, das eine Veränderung des Strömungswiderstandes durch den Schacht 2 zur Folge hat, kann auch durch Drucksensoren erfasst werden, die im Strömungsweg des Abgases, vorzugsweise hinter dem Gasauslass 12, angeordnet sind und ein Signal zur Steuerung der Klappe 52 liefern.

Fig. 5 zeigt in einer perspektivischen Ansicht von schräg unten eine bevorzugte Ausführungsform des Schiebers 13 der Chargiervorrichtung. Der Schieber 13 weist an seiner Unterseite 15 Laufrollen 56 auf, die aus der Unterseite etwas vorstehen und deren Drehachsen quer zur Verschieberichtung des Schiebers 13 angeordnet sind. Hierdurch wird die bei der Vor- und Rückwärtsbewegung des Schiebers 13 ansonsten vorhandene Gleitreibung zwischen der Unterseite 15 des Schiebers 13 und der Oberseite 19 des Schachtbodens 8 durch eine Rollreibung ersetzt. Dies ermöglicht eine Reduzierung des für die Bewegung des Schiebers erforderlichen Hydraulikdrucks in der Hydraulikleitung 42 und eine Verbesserung der Steuerung der ersten Steuereinheit 40 über den Messwandler 41. Die Rollen laufen beim Vor- und Zurückbewegen des Schiebers 13 auf der flachen Oberseite 19 des Schachtbodens ohne individuelle seitliche Führung. Die seitliche Führung des Schiebers 13 erfolgt über dessen konvergierende Seitenflächen 17 und 18. Vor und hinter den Laufrollen 56 sind an der Unterseite 15 des Schiebers 13 schräg zur Laufrichtung leistenförmige Abstreifer 58 angeordnet, die bei der Vorwärtsbewegung beziehungsweise bei der Rückwärtsbewegung des Schiebers 13 kleinere Teilchen des Einsatzmaterials, aus der Laufbahn der betreffenden Laufrolle 56 zur Seite abstreifen.

Bei dem dargestellten Ausführungsbeispiel sind die Laufrollen 56 jeweils in Rollenlagereinheiten 57 gelagert, die in die Unterseite 15 des Schiebers 13 lösbar so eingesetzt sind, dass die Rollen etwa einen bis einige Zentimeter aus der Unterseite 14 des Schiebers 13 vorstehen.

## Patentansprüche

1. Chargiervorrichtung (1) zum Chargieren von Chargiergut in ein Schmelzgefäß, enthaltend einen Schacht (2), mit
in einer Rahmenkonstruktion (3) gehaltenen Schachtwänden (4, 5, 6, 7),
einem unteren Schachtboden (8),
einer oberen Eintrittsöffnung (9) für Chargiergut,
einer Austrittsöffnung (11) für Chargiergut im unteren Bereich einer Schachtwand (4), einen Schieber (13),
der zum schubweisen Fördern von Chargiergutteilmengen aus dem Schacht (2) durch die genannte Austrittsöffnung (11) hindurch mittels einer ersten Betätigungsvorrichtung (20; 20/1 20/2) aus einer, den Schachtboden freigebenden, zurückgezogenen, ersten Position zur genannten Austrittsöffnung (11) hin in eine vorgeschobene, zweite Position vorschiebbar und dann wieder in die erste Position zurück schiebbar ist,
ferner enthaltend ein die genannte Austrittsöffnung (11) oben begrenzendes heb- und senkbares oberes Begrenzungsteil (26),
**dadurch gekennzeichnet, dass**
eine zweite Betätigungsvorrichtung (28; 28/1, 28/2) zum Anheben des oberen Begrenzungsteils (26) aus einer abgesenkten Position und eine erste Steuereinheit (40) zur Steuerung dieser zweiten Betätigungsvorrichtung (28; 28/1, 28/2) vorgesehen sind,
ferner mit der ersten Steuereinheit (40) ein Sensor (41) verbunden ist, der geeignet ist, die Vorschubkraft beim Vorschieben des Schiebers (13) zu erfassen und ein der Vorschubkraft entsprechendes Signal an die erste Steuereinheit (40) zu liefern, ferner die erste Steuereinheit (40) ausgelegt ist, das die Vorschubkraft kennzeichnende Signal mit einem einstellbaren oberen Grenzwert der Vorschubkraft zu vergleichen und zu veranlassen, dass die zweite Betätigungsvorrichtung (28; 28/1, 28/2) beim Überschreiten des eingestellten Grenzwertes das obere Begrenzungsteil (26) der Austrittsöffnung (11) anhebt.

2. Chargiervorrichtung nach Anspruch 1, **dadurch gekennzeichnet, dass** die erste Steuereinheit (40) und die zweite Betätigungsvorrichtung (28; 28/1, 28/2) ausgelegt sind, bei einem auf ein Anheben des oberen Begrenzungsteils (26) folgenden Abfall der Vorschubkraft ein Absenken des oberen Begrenzungsteils (26) frei zu geben.

3. Chargiervorrichtung nach Anspruch 1 oder 2, **dadurch gekennzeichnet, dass** die erste Steuereinheit (40) und die zweite Betätigungsvorrichtung (28; 28/1, 28/2) ausgelegt sind, beim Zurückschieben des Schiebers (13) ein Absenken des oberen Begrenzungsteils (26) frei zu geben.

4. Chargiervorrichtung nach einem der vorhergehenden Ansprüche, **dadurch gekennzeichnet, dass** die erste Steuereinheit (40) und die zweite Betätigungsvorrichtung (28; 28/1, 28/2) ausgelegt sind, bei einem auf ein Anheben des oberen Begrenzungsteils (26) folgenden Abfall der Vorschubkraft des Schiebers (13) das obere Begrenzungsteil (26) abzusenken.

5. Chargiervorrichtung nach einem der vorhergehenden Ansprüche, bei der die erste Betätigungsvorrichtung (20) als hydraulischer Linearantrieb (20/1, 20/2) ausgebildet ist, der in der Rahmenkonstruktion (3) um eine horizontale Achse schwenkbar gelagert ist, **dadurch gekennzeichnet, dass** der die Vorschubkraft beim Vorschieben des Schiebers (13) erfassende Sensor (41) den Hydraulikdruck des hydraulischen Linearantriebs (20/1, 20/2) erfasst.

6. Chargiervorrichtung nach einem der vorhergehenden Ansprüche, **dadurch gekennzeichnet, dass** das obere Begrenzungsteil (26) um eine horizontale Achse (27) schwenkbar ist.

7. Chargiervorrichtung nach einem der vorhergehenden Ansprüche, **dadurch gekennzeichnet, dass** das obere Begrenzungsteil (26) als ein die Austrittsöffnung (11) oben begrenzender Begrenzungsbalken ausgebildet ist.

8. Chargiervorrichtung nach einem der vorhergehenden Ansprüche, **dadurch gekennzeichnet, dass** an der Stirnseite (16) des Schiebers (13) im Abstand voneinander angeordnete Stoßstangen (21) vorgesehen sind.

9. Chargiervorrichtung nach Anspruch 8, **dadurch gekennzeichnet, dass** die Stoßstangen (21) nur im unteren Bereich der Stirnseite (16) des Schiebers (13) vorgesehen sind.

10. Chargiervorrichtung nach einem der vorhergehenden Ansprüche, **dadurch gekennzeichnet, dass** eine Wiegevorrichtung (49) vorgesehen ist, mit der jeweils das Gewicht der bei einer Vorschubbewegung des Schiebers (13) durch die Austrittsöffnung (11) aus dem Schacht (2) geförderten Chargiergutteilmenge bestimmbar ist.

11. Chargiervorrichtung nach Anspruch 10, **dadurch gekennzeichnet, dass** eine zweite Steuereinheit (45) vorgesehen ist, durch die die Geschwindigkeit des Schiebers (13) abhängig von einem durch die Wiegevorrichtung (49) gelieferten Messsignal steuerbar ist, welches die bei einer Vorschubbewegung des Schiebers (13) aus dem Schacht (2) geförderte Chargiergutteilmenge kennzeichnet.

12. Chargiervorrichtung nach Anspruch 10 oder 11, **dadurch gekennzeichnet, dass** die Wiegevorrichtung (49) ausgelegt ist, Gewichtsveränderungen des Schachtes (2) zu messen, die durch Austragen einer Chargiergutteilmenge aus dem Schacht (2) bei einer Vorschubbewegung des Schiebers (13) auftreten.

13. Chargiervorrichtung nach Anspruch 12, **dadurch gekennzeichnet, dass** die Wiegevorrichtung als Sensor wenigstens eine Wägezelle (49) aufweist, die zwischen dem, den Schacht (2) tragenden Rahmen (3) und dessen Auflage (50) angeordnet ist und an die zweite Steuereinheit (45) ein durch diese verarbeitbares Messsignal liefert.

14. Chargiervorrichtung nach Anspruch 13, **dadurch gekennzeichnet, dass** bei einer Chargiervorrichtung, die mittels eines Fahrgestells (50) auf Rädern (34) verschiebbar ist, die wenigstens eine Wägezelle (49) zwischen der Rahmenkonstruktion (3) des Schachtes (2) und dem Fahrgestell (50) angeordnet ist.

15. Chargiervorrichtung nach einem der vorhergehenden Ansprüche, bei der der Schieber (13) zwei parallel zur Verschieberichtung verlaufenden Seitenflächen (17, 18) aufweist, die von der Oberseite zur Unterseite (15) des Schiebers (13) konvergieren.

16. Chargiervorrichtung nach einem der vorhergehenden Ansprüche, bei der der Schieber (13) an der Unterseite (15) vorstehende Laufrollen (56) aufweist, deren Drehachsen quer zur Verschieberichtung des Schiebers (13) angeordnet sind.

17. Chargiervorrichtung nach Anspruch 16, **dadurch gekennzeichnet, dass** die Laufrollen jeweils in Rollenlagereinheiten (57) gelagert sind, die in der Unterseite (15) des Schiebers (13) lösbar eingesetzt sind.

18. Chargiervorrichtung nach Anspruch 16 oder 1 7, **dadurch gekennzeichnet, dass** an der Unterseite (15) des Schiebers (13) in Laufrichtung der Laufrollen (56) vor und/oder hinter den Laufrollen (56) schräg zur Laufrichtung Abstreifer (58) angeordnet sind.

19. Chargiervorrichtung nach einem der vorhergehenden Ansprüche, bei der der durch die Schachtwände (4,5,6,7) begrenzte Innenraum des Schachtes (2) im Horizontalschnitt rechteckig ausgebildet ist.

20. Chargiervorrichtung nach einem der vorhergehenden Ansprüche, bei der an der Austrittsöffnung (11) für Chargiergut ein diese umgebender Ansatz (33) zum Anschließen an eine Chargieröffnung (32) eines Schmelzgefäßes (31) vorgesehen ist.

21. Chargiervorrichtung nach Anspruch 20, bei der der Ansatz in Form einer Muffe (33) ausgebildet ist, deren Außenkontur zum Einsetzen in die Chargieröffnung (32) des Schmelzgefäßes (31) an die Innenkontur dieser Chargieröffnung (32) angepasst ist.

22. Chargiervorrichtung nach einem der vorhergehenden Ansprüche, bei der die Austrittsöffnung (11) für Chargiergut im unteren Bereich einer Schachtwand (2) als Gaseinlass für ein Heizgas zum Aufheizen von im Schacht befindlichem Chargiergut ausgebildet ist, die obere Eintrittsöffnung (9) für Chargiergut durch einen Deckel (10) verschließbar ist, und im oberen Bereich des Schachtes (2) ein Gasauslass (12) für das durch den Schacht geleitete Heizgas vorgesehen ist.

23. Chargiervorrichtung nach Anspruch 22, **dadurch gekennzeichnet, dass** parallel zum Strömungsweg des Heizgases durch den Schacht (2) eine Gas-Bypassleitung (51) mit einer steuerbaren Absperrklappe (52) vorgesehen ist.

24. Lichtbogenofen mit einer Chargiervorrichtung nach Anspruch 22 oder 23, deren Austrittsöffnung (11) für Chargiergut mit einer Chargieröffnung (32) in der Wand des Ofengefäßes (31) verbindbar ist, **dadurch gekennzeichnet, dass** unterhalb der Chargieröffnung (32) ein Kasten (53) mit wenigstens einem Brenner (54) angeordnet ist, dessen Austrittsöffnung oberhalb des maximalen Schmelzbadspiegels (55) in das Ofengefäß (31) mündet.

## Claims

1. Charging device (1) for charging of charging stock into a melting vessel, comprising a shaft (2) having
shaft walls (4, 5, 6, 7) held in a frame structure (3),
a lower shaft floor (8),
an upper inlet opening (9) for charging stock,
a discharge opening (11) for charging stock in the lower area of a shaft wall (4), a pusher (13),
which pusher (13) is shiftable, for batch transport of charging stock batches out of the shaft (2) through said discharge opening (11), by means of a first actuating device (20); 20/1, 20/2) from a first retracted reposition exposing the shaft floor towards said discharge opening (11) into a second advanced position and then back into a first position,
further comprising an upper limiting part (26) which is adapted to be lifted and lowered and limits the said discharge opening (11) from above,
**characterised in that**
a second actuating device (28; 28/1, 28/2) for lifting said upper limiting part (26) from a lowered position and a first control unit (40) for controlling this second actuating device (28; 28/1, 28/2) are provided,
a sensor (41) is connected to the first control unit (40), which is suitable for sensing the pushing force at the shifting of the pusher (13) and to provide a signal corresponding to the pushing force to the control unit (40), the first control unit (40) is designed to compare the signal characterising the pushing force with a settable upper limit of the pushing force and to initiate that the second actuating device (28; 28/1, 28/2) lifts the upper limiting part (26) of the discharge opening (11), when the said limit is exceeded.

2. Charging device according to claim 1, **characterised in that** the first control unit (40) and the second actuating device (28; 28/1, 28/2) are designed to enable a lowering of the upper limiting part (26) in case of a decrease of the pushing force following a lifting of the upper limiting part (26).

3. Charging device according to claim 1 or 2, **characterised in that** the first control unit (40) and a second actuating device (28; 28/1, 28/2) are designed to enable a lowering of the upper limiting part (26) at the time of shifting back the pusher (13).

4. Charging device according to one of the preceding claims, **characterised in that** the first control unit (40) and the second actuating device (28; 28/1, 28/2) are designed to lower the upper limiting part (26) in case of a decrease of the pushing force of the pusher (13) following a lifting of the upper limiting part (26).

5. Charging device according to one of the preceding claims, wherein the first actuating (28) is implemented as an hydraulic linear drive (20/1, 20/2), which is supported pivotable around a horizontal axis in the frame construction, **characterised in that** the sensor (41) sensing the pushing force at the forward shifting of the pusher (13) senses the hydraulic pressure of the hydraulic linear drive (20/1, 20/2).

6. Charging device according to one of the preceding claims, **characterised in that** the upper limiting part (26) is pivotable around a horizontal axis (27).

7. Charging device according to one of the preceding claims, **characterised in that** the upper limiting part (26) is implemented as a limiting bar (26) limiting the discharge opening (11) from above.

8. Charging device according to one of the preceding claims, **characterised in that** abutment bars (21) are provided at the front side (16) of the pusher (13) spaced apart from each other.

9. Charging device according to claim 8, **characterised in that** the abutment bars (21) are only provided in the lower region of the front side (16) of the pusher (13).

10. Charging device according to one of the preceding claims, **characterised in that** a weighing device (49) is provided, by means of which the weight of the charging stock batch can be determined, which is conveyed through the discharge opening (11) out of the shaft (2) with a pushing movement of the pusher (13).

11. Charging device according to claim 10, **characterised in that** a second control unit (45) is provided, by means of which the velocity of the pusher (13) can be controlled depending on a measurement signal provided by the weighing device (49), which characterises the charging stock batch conveyed out of the shaft (2) with a pushing movement of the pusher (13).

12. Charging device according to claim 10 or 11, **characterised in that** the weighing device (49) is designed to measure weight changes of the shaft (2) occurring because of the output of a charging stock batch out of the shaft (2) with a pushing movement of the pusher (13).

13. Charging device according to claim 12, **characterised in that** the weighing device comprises as a sensor at least one weighing cell (49), which is arranged between the frame (3) carrying the shaft (2) and its support (50) and provides a measurement signal to the second control unit (45) suitable to be processed by the same.

14. Charging device according to claim 13, **characterised in that** the at least one weighing cell (49) is, in a charging device shiftable by means of a carrier (50) on wheels (34), arranged between the frame construction (3) of the shaft (2) and the carrier (50).

15. Charging device according to one of the preceding claims, wherein the pusher (13) comprises two side faces (17, 18) extending parallel to the pushing direction, which converge from the upper side to the lower side (15) of the pusher (13).

16. Charging device according to one of the preceding claims, wherein the pusher (13) comprises bottom rollers (56) protruding at its lower side (15), the rotating axes of which are arranged transversal to the shift direction of the pusher (13).

17. Charging device according to claim 16, **characterised in that** the bottom rollers are each supported in bottom roller units (57), which are detachably inserted in the lower side (15) of the pusher (13).

18. Charging device according to claim 16 or 17, **characterised in that** strippers (58) are arranged at the lower side (15) of the pusher (13) in the running direction of the bottom rollers (56) in front of and/or behind the bottom rollers (56) oblique to the running direction.

19. Charging device according to one of the preceding claims, wherein the inner space of the shaft (2) limited by the shaft walls (4, 5, 6, 7) is shaped rectangular in the horizontal cross-section.

20. Charging device according to one of the preceding claims, wherein a collar (33) surrounding the discharge opening (11) for charging stock is provided for connection to a charging opening (32) of a melting vessel (31).

21. Charging device according to claim 20, wherein the collar is formed in the shape of a sleeve (33), the outer contour of the sleeve (33) being adapted, for insertion into the charging opening (32) of the melting vessel (31), to the inner contour of this charging opening (32).

22. Charging device according to one of the preceding claims, wherein the discharge opening (11) for charging stock is formed in the lower region of a shaft wall (2) as a gas inlet for a heating gas for heating of charging stock present in the shaft, the upper inlet opening (9) for charging stock is closeable by a lid (10), and a gas outlet (12) for heating gas conducted through the shaft is provided in the upper region of the shaft (2).

23. Charging device according to claim 22, **characterised in that** a gas bypass conduct (51) with a controllable shutter (52) is provided parallel to the flow path of the heating gas through the shaft (2).

24. Electric arc furnace with a charging device according to claim 22 or 23, where the discharge opening (11) for charging stock is connectable with a charging opening (32) in a wall of the furnace vessel (31), **characterised in that** a box (53) with at least one burner (54) is arranged below the charging opening (32), the outlet opening of which is entering into the furnace vessel (31) above the maximum melting bath level (55).

## Revendications

1. Dispositif de chargement (1) pour le chargement de produit de chargement dans un creuset, comprenant:
une cuve (2), avec
des parois de cuve (4,5,6,7) inscrites dans une ossature (3);
un fond de cuve inférieur (8),
une ouverture d'entrée supérieure (9) pour le produit de chargement,
une ouverture de sortie (11) pour le produit de chargement dans une paroi
latérale dans la zone inférieure de la cuve (2),
un registre (13),
qui est déplaçable en avant pour le transport par fournées des parties du produit de chargement de la cuve (2) au travers de ladite ouverture de sortie (11) au moyen d'un premier dispositif d'actionnement (20 ; 20/1, 20/2), d'une première position retirée, libérant le fond de la cuve, à une deuxième position
avancée, et qui est ensuite encore déplaçable en arrière au première position, en outre comprenant un élément de limitation supérieur (26) levable et abaissable et limitant ladite ouverture de sortie (11) vers le haut,
**caractérisé en ce que**
un deuxième dispositif d'actionnement (28; 28/1, 28/2) pour lever l'élément de limitation supérieur (26) d'une position abaissée et une première unité de commande (40) commandant ledit deuxième dispositif d'actionnement (28; 28/1, 28/2) sont prévus,
en outre un capteur (41) est relié avec la première unité de commande (40), le capteur adapté à détecter la force d'avancement en avançant le registre (13) et à délivrer un signal correspondant à la force d'avancement à la première unité de commande (40), en outre la première unité de commande (40) adaptée à comparer le signal caractérisant la force d'avancement avec une valeur limite supérieure et à provoquer le deuxième dispositif d'actionnement (28; 28/1, 28/2) à lever l'élément de limitation supérieur (26) au cas d'excéder la valeur limite supérieure adaptée.

2. Dispositif de chargement (1) suivant la revendication 1, **caractérisé en ce que** la première unité de commande (40) et le deuxième dispositif d'actionnement (28; 28/1, 28/2) sont adaptés a permettre la descente de l'élément de limitation supérieur (26) au cas de la chute de la force d'avancement suivante à l'élévation de l'élément de limitation supérieur (26).

3. Dispositif de chargement (1) suivant l'une des revendications 1 ou 2, **caractérisé en ce que** la première unité de commande (40) et le deuxième dispositif d'actionnement (28; 28/1, 28/2) sont adaptés a permettre la descente de l'élément de limitation supérieur (26) au cas de déplacer le registre (13) en arrière.

4. Dispositif de chargement (1) suivant l'une des revendications précédentes, **caractérisé en ce que** la première unité de commande (40) et le deuxième dispositif d'actionnement (28; 28/1, 28/2) sont adaptés à descendre l'élément de limitation supérieur (26) au cas de la chute de la force d'avancement du registre (13) suivante à l'élévation de l'élément de limitation supérieur (26).

5. Dispositif de chargement (1) suivant l'une des revendications précédentes, dans lequel le premier dispositif d'actionnement (20) a la forme d'un entraînement linéaire hydraulique (20/1, 20/2), qui est monté pivotant autour d'un axe horizontal dans l'ossature (3), **caractérisé en ce que** le capteur (41) détectant la force d'avancement en avançant le registre (13) détecte la pression hydraulique du entraînement linéaire hydraulique (20/1, 20/2).

6. Dispositif de chargement (1) suivant l'une des revendications précédentes, **caractérisé en ce que** l'élément de limitation supérieur (26) est monté pivotant autour d'un axe horizontal (27).

7. Dispositif de chargement (1) suivant l'une des revendications précédentes, **caractérisé en ce que** l'élément de limitation supérieur (26) est formé par barre d'extrémité limitant l'ouverture de sortie (11) vers le haut.

8. Dispositif de chargement (1) suivant l'une des revendications précédentes, **caractérisé en ce que** des tiges (21) sont prévues à la face frontale (16) du registre (13) espacées entre elles.

9. Dispositif de chargement (1) suivant la revendication 8, **caractérisé en ce que** les tiges (21) ne sont prévues qu' à la partie inférieure de la face frontale (16) du registre (13).

10. Dispositif de chargement (1) suivant l'une des revendications précédentes, **caractérisé en ce que** un dispositif de pesage (49) est prévu, avec lequel le poids de la partie du produit de chargement transportée de la cuve (2) au travers de l'ouverture de sortie (11) peut être déterminé à la fois.

11. Dispositif de chargement (1) suivant la revendication 10, **caractérisé en ce que** une deuxième unité de commande (45) est prévue d'une manière commandable en fonction d'un signal de commande détecté et délivré du dispositif de pesage (49) caractérisant la partie du produit de chargement transportée de la cuve (2) en avançant le registre (13).

12. Dispositif de chargement (1) suivant l'une des revendications 10 ou 11, **caractérisé en ce que** le dispositif de pesage (49) est adapté à détecter des changements du poids de la cuve (2), qui apparaissent en avançant le registre (13).

13. Dispositif de chargement (1) suivant la revendication 12, **caractérisé en ce que** le dispositif de pesage comporte au moins une cellule de pesée (49) disposée entre l'ossature (3) de la cuve (2) et le son support (50) et délivrant un signal détecté à la deuxième unité de commande (45), la deuxième unité de commande (45) adaptée à traiter le signal.

14. Dispositif de chargement (1) suivant la revendication 13, **caractérisé en ce qu'**au moins une cellule de pesée (49) est disposée entre l'ossature (3) de la cuve (2) et un châssis du dispositif de chargement (1) déplaçable par le châssis sur des roues (34).

15. Dispositif de chargement (1) suivant l'une des revendications précédentes, **caractérisé en ce que** le registre (13) a deux faces latérales (17,18) parallèles à la direction de déplacement, qui convergent de la face supérieure à la face inférieure du registre (13).

16. Dispositif de chargement (1) suivant l'une des revendications précédentes, **caractérisé en ce que** des galets de roulement (56) sont prévus en sailli à la face inférieure (15) du registre (13), dont les axes de rotation sont disposés transversalement à la direction de déplacement du registre (13).

17. Dispositif de chargement (1) suivant la revendication 16, **caractérisé en ce que** les galets de roulement (56) sont montés par unités de rouleaux (57) étant installées détachables à la face inférieure (15) du registre (13).

18. Dispositif de chargement (1) suivant l'une des revendications 16 ou 17, **caractérisé en ce que** des déflecteurs (58) sont prévus transversalement au sens machine à la face inférieure (15) du registre (13) en avant et/ou en arrière au sens machine des galets de roulement (56).

19. Dispositif de chargement (1) suivant l'une des revendications précédentes, **caractérisé en ce que** l'espace intérieur de la cuve (2) limité par les parois des cuve (4,5,6,7) a une forme rectangulaire dans la section horizontale.

20. Dispositif de chargement (1) suivant l'une des revendications précédentes, **caractérisé en ce qu'**au niveau de l'ouverture de sortie (11) pour le produit de chargement, une pièce ajoutée (33) entourant cette ouverture est prévue pour le raccordement a une ouverture de chargement (32) d'un creuset (31).

21. Dispositif de chargement (1) suivant la revendication 20, **caractérisé en ce que** la pièce ajoutée a la forme d'un manchon (33) dont le contour extérieur est adapté pour s'insérer dans une ouverture de chargement (32) d'un creuset (31) sur le contour intérieur de l'ouverture de chargement (32).

22. Dispositif de chargement (1) suivant l'une des revendications précédentes, **caractérisé en ce que** l'ouverture de sortie (11) pour le produit de chargement forme dans une paroi latérale dans la zone inférieure de la cuve (2) une entrée de gaz pour un gaz de chauffage en vue du chauffage du produit de chargement se trouvant dans la cuve, l'ouverture d'entrée supérieure (9) pour le produit de chargement étant fermable par un couvercle (10) et une sortie de gaz (12) étant prévue pour le gaz de chauffage dans la zone supérieure de la cuve (2).

23. Dispositif de chargement (1) suivant la revendication 22, **caractérisé en ce qu'** un conduit de dérivation de gaz (51) est prévu en parallèle à la voie annulaire d'écoulement du gaz de chauffage, comprenant un clapet d'arrêt (52) commandable.

24. Four à plasma d'arc comprenant un dispositif de chargement suivant l'une des revendications 22 ou 23, dont l'ouverture de sortie (11) du produit de chargement peut être connectée à une ouverture de chargement (32) formée dans le paroi de la cuve de four (31), **caractérisé en ce que** une caisse (53) comprenant au moins un brûleur est disposée au dessous de l'ouverture de chargement (32), dont l'ouverture de sortie converge a la cuve de four (31) au dessus du niveau du bain de fusion (55).
